(19) **Europäisches Patentamt**

**European Patent Office**

**Office européen des brevets**

(11) **EP 0 777 215 B1**

(12) **EUROPEAN PATENT SPECIFICATION**

(45) Date of publication and mention
of the grant of the patent:
**11.12.2002 Bulletin 2002/50**

(51) Int Cl.⁷: **G11B 5/596**

(21) Application number: **96113553.0**

(22) Date of filing: **23.08.1996**

(54) **Sinusoidal gain correction to compensate for magnetoresistive head servo gain variations**

Sinusförmige Verstärkungskorrektur zum Kompensieren der Verstärkungsänderungen eines magnetoresistiven Servokopfes

Correcteur de gain sinusoidal pour tenir compte des variations de gain dans une tête magnétoresistive

(84) Designated Contracting States:
**DE FR GB**

(30) Priority: **30.11.1995 US 565569**

(43) Date of publication of application:
**04.06.1997 Bulletin 1997/23**

(73) Proprietor: **Hewlett-Packard Company,
A Delaware Corporation
Palo Alto, CA 94304 (US)**

(72) Inventor: **Martinez, Boris N.
Boise, Idaho 83713 (US)**

(74) Representative: **Schoppe, Fritz, Dipl.-Ing.
Schoppe, Zimmermann & Stöckeler
Patentanwälte
Postfach 71 08 67
81458 München (DE)**

(56) References cited:
**EP-A- 0 361 222        EP-A- 0 442 650
WO-A-92/02929        WO-A-93/15505
US-A- 5 369 345**

## EP 0 777 215 B1

**Description**

This invention relates to a disk drive servo system for controlling positioning of a head over a desired track of magnetic media containing data on a rotating surface of a hard disk of a data storage device.

Computer hard drives are available in a wide variety of configurations which enable a broad range of storage capacities for information stored on a disk, or platter. For applications requiring only minimal data storage, a single magnetic hard disk proves suitable. For applications requiring considerably more storage capacity, multiple-hard disk devices are more desirable. Irrespective of the hard drive configuration, typically both the top and bottom surfaces of each hard drive are configured to store tracks of information in the form of magnetic media provided on a surface of the hard disk, each surface thereby providing a unique data storage device. A rotating support arm carries a read/write head over the data tracks on each hard drive surface to read and write data between the heads and tracks. The rotating support arm is configured to substantially align each read/write head with data tracks on each disk, with one head reading servo position information. The one head is configured as a servo head that follows a data track having servo position information stored in the form of tracks on an associated disk surface. In order to achieve a maximum storage capacity, data tracks can be packed as tightly together as possible on each disk surface. However, this requires implementation of an accurate and precise global control system in order to position the support arm and heads into an aligned position with desired tracks on each hard drive surface.

To create a rotary positionable sensor head capable of read/write use with a stack of disks, the support arm is formed from a plurality of actuator arms, each having a two-part construction. Typically, a top actuator arm tracks prerecorded servo information in order to position the support arm into alignment with an entire array of stacked disks forming a stacked hard drive array. The top actuator arm carries the servo head, which tracks positioning of the entire support arm by controlling the positioning of the servo head over a desired track of reference data on the face of the topmost hard disk of the disk array. Hence, the support arm concurrently aligns each of the read/write heads carried by each of the remaining actuator arms therebelow, since the actuator arms are configured substantially parallel to one another. In this manner, the servo head is utilized to position the entire support arm and the read/write heads in positional relation with tracks of associated information. For the servo head, the information is servo position information. For a read/write head, the information is read/write data carried by magnetic media provided on accompanying surfaces of each respective hard drive. The support arm is accurately rotated into position by a rotary servo motor, the motor being responsive to control signals received from a servo control system. The servo control system receives input signals from the servo head indicating off-track position of the servo head in relation to a desired track of servo position information being followed by the servo head on the hard drive. The servo head off-track position corresponds to a read/write head off-track position between each read/write head and associated tracks of read/write stored data.

The available configurations of computer hard disk drives that are capable of aligning read/write heads with desired data tracks on a hard disk can generally be classified into two categories: dedicated servo disk drives and embedded servo disk drives. Dedicated servo disk drives have one or more magnetized hard disks wherein one entire surface of a disk is dedicated to storing prerecorded servo position information that is read by a read-only servo head to adjust the positions of the corresponding read/write heads over their associated hard drive surfaces. The servo position information is used to control and synchronize operation of the magnetic disk(s) and to position the read/write head(s). In contrast, embedded servo disk drives have one or more magnetic disks which store bursts of servo position information embedded at regular intervals amid the data tracks on the disk surface wherein each disk has thin "pie-shaped" slices reserved for the servo position information interspersed between larger "pie-shaped" regions for data storage.

Conventional disk drives employ a closed loop servo control system in order to regulate positioning of the read/write heads over tracks of read/write information stored on surfaces of each disk by controlling activation of the servo motor. The servo control system receives a reference signal from the servo head indicating off-track servo position information of the servo head over the disk surface. The closed loop servo control system implements rotational positioning of the servo head by way of inputing a signal to the servo motor in response to the off-track position information produced by the servo head relative to the desired track. The control loop system tries to minimize any off-track or radial displacement between the head and track. In order to accurately control positioning of the read/write heads over data tracks on the disk surfaces, the closed loop servo control system should be able to accurately produce a stable and controlled steady-state error signal indicative of positioning of the servo head with respect to a desired track of servo information, enabling smooth and accurate rotational control of the servo motor in a dynamic manner while reading and writing from surfaces of a disk. Additionally, timing systems can be provided by the servo information being read by the servo head since the hard disks typically rotate at a known speed which proves critical in choreographing timing and indicating status of both the servo system and the read/write system.

One problem associated with disk drives relates to lateral wobbling of the rotating hard disks due to imperfect rotation, vibrations, random noise, and thermal effects. The main problem, referred to as "runout", is caused from the circular storage disks which are usually slightly decentered from their optimal axis of rotation, allowing the disks to move laterally in a back and forth pattern. There are two kinds of problems caused by runout: when writing servo information onto a rotating disk, the wobbling can produce an acircular track of information that is hard to read, which becomes difficult for a servo control loop to dynamically control if the servo gain variation becomes too great when directing activation of a servo motor to accurately position a servo head and read/write heads over a desired data track being followed. The other runout problem is caused when the disk drive containing the prerecorded servo position information is driven in rotation which can induce a separate wobbling of the disks during a read phase of operation, making it difficult for the control system to track the information which has often already been recorded as an acircular track. In this manner, runout is caused during a read portion which is superposed over runout that has already manifest itself as an acircular track of servo position information earlier recorded onto the disk surface.

This invention relates to a disk drive which overcomes the above drawbacks. The disk drive of this invention significantly improves tracking by improving servo gain characteristics that vary due to "runout", significantly enhancing response and accuracy of the closed loop servo control system. The disk drive servo control system of this invention significantly reduces any stead-state positioning error produced by rotating the servo head into position with a servo motor over a desired track of information on a hard drive carrying servo information. The control system has the ability to substantially correct gain variations that occur as a result of off-center positioning of a servo head over a desired track of servo information which can result in an unstable servo control system that can go into oscillation when attempting to position a servo head over a disk having acircular tracks, or runout errors with respect to the servo information put down by a servo writer or read head. The disk drive implements an improved and stabilized control system by substantially improving large servo gain variations resulting from off-track positioning of a servo head, particularly for magnetoresistive (MR) heads.

In a preferred embodiment, this invention achieves these objectives by improving poor gain performance within a servo loop caused by off-track positioning of the servo head between a desired and a detected position.

EP 0 442 650 A2 describes a disk file with adaptive correction for a non-repeatable run out. In disk files, a problem arises during track flowing in that the head is off the track line. One reason for such an error is a repeatable disk run out error at the same frequency during the rotation of the disk as well as a non-repeatable error. The non-repeatable run out has a dominant sinusoidal behaviour. The system of EP 0 442 650 A2 has a digital signal generating means including a sinusoidal function generator responsive to an input to compute a non-repeatable run out signal of sinusoidal form which presents the presence of non-repeating errors in the head position. The servo control system generates an estimate of the sinusoidal function representative of the dominance in a sinusoidal component of the non-repeatable run out for one disk rotation and adds the signal to the digital control signal to eliminate the dominant sinusoidal component from the position error signal.

It is the object of the present invention to provide an improved disk drive servo system and method for controlling a positioning of a servo head which significantly improves the tracking of a head in order to follow a desired track.

This object is achieved by a system according to claim 1 and by a method according to claim 9.

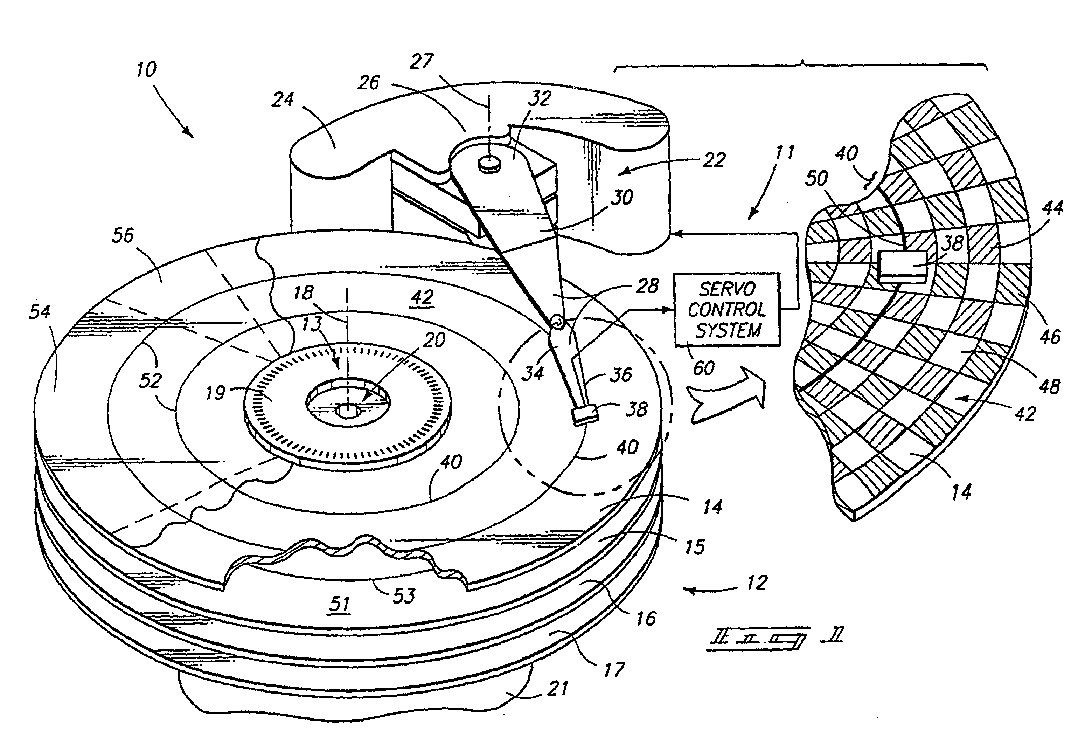

According to one aspect of this invention, the computer disk drive shown in Fig. 1 receives a positioning reference signal from a servo head and implements a gain correction factor to better control activation of a servo motor to enhance stability and accurate positioning of the servo head and accompanying read/write heads via a support arm over desired tracks of information provided on surfaces of a disk. The disk drive has at least one storage hard disk rotatably carried by a support, or frame to spin about an axis of rotation. A support arm is rotatably connected to the support, is offset from the disk axis of rotation, and moves relative to the storage disk to radially position a servo head and corresponding read/write head(s) across associated surfaces of storage disk(s) mounted together in an array. The disk drive has a closed loop servo control system including a servo head with a servo control loop configured to implement a gain correction within the loop. The gain correction is implemented to substantially correct gain variations of the servo head that occur as a function of relative track position between the servo head and a desired track of servo position information. The servo position information is prerecorded onto a corresponding disk surface: for the case of dedicated servo disk drives, the information is provided on a dedicated disk surface; for the case of embedded disk drives, the information is provided on slices of disk space interspersed between larger data storage slices formed on the disk surface. The servo control system is configured to control activation of a servo motor which positions the servo head over a desired track of servo position information, along with associated read/write heads over associated tracks of data comprising magnetic media prerecorded onto a surface of a disk(s). In essence, the positioning of the servo head by the control system directs the positioning of read/write heads over associated tracks of read/write information on the associated disk surfaces. In this manner, radial runout on the disk as well as additional errors caused by wobbliness occurring during reading/writing of information from/to the disk surfaces can be detected by the servo head and substantially corrected by implementing a servo gain correction factor which stabilizes the servo control system or servo mechanism as the servo head follows a track of servo position information.

According to another aspect, the disk drive implements a servo gain correction factor having a sinusoidal shaped gain correction that is implemented by a compensator of the servo control loop. The compensator realizes a sine wave function that is weighted to substantially match gain variations caused by the measured servo head tracking error, or off-track position. The servo gain variation is characterized with a least squares fit, after which the weighted gain correction factor is subtracted from actual servo gain. In order to do this, the gain correction factor is shifted in-phase with the sinusoidal shaped servo gain that is actually measured. According to another aspect, the servo control loop is a phase lead compensation network for imparting a phase advance to a gain of the servo allowing realization of desirable gain characteristics at a gain cross over frequency. According to another aspect of the invention, the servo control loop is implemented with a phase lead compensation network that imparts a phase margin within a range of 25 to 35 degrees.

According to another aspect of the invention, the servo control loop comprises an integral control system in which output is proportional to a time integral of the input, the integral control system having integral action configurable to impart a desired set point. According to another aspect, the servo control loop comprises a proportional plus integral control system in which output comprising a servo activating command is proportional to a linear combination of input and time integral of input. According to a further aspect, the servo control loop comprises a proportional plus integral plus derivative control system in which output comprising a servo activating command is proportional to a linear combination of input, time integral of input, and time rate of change of input, the servo control system being configured to drive steady state tracking errors to zero. According to yet another aspect, the disk drive servo system includes a servo control loop having at least one band reject filter configured to filter out input energy to the servo system corresponding substantially to resonant frequencies of the servo system, thereby minimizing phase contribution at a gain cross over for the servo system.

According to yet another aspect, a method for controlling a centered positioning of a head following a track of magnetic media on a rotating surface of the hard disk of a data storage device includes the steps of moving the hard disk in rotation about a central support, providing a support arm carrying a servo head over a track center on a track containing servo position information to be followed on a disk, providing a servo control loop configured to control actuation of the servo motor rotatably driving the support arm for positioning the servo head over the track, the control loop having a track center error compensator configured to implement a sinusoidal gain correction for off-track servo gain variations occurring there along, detecting track center error indicative of a position of the servo head with respect to the track center, and applying an error weighted sine wave correction factor to the servo gain in order to substantially offset variations in the servo gain resulting from acircular perturbations of the track relative to the head to facilitate steady state control and repositioning of the head over the track.

Preferred embodiments of the invention are described below with reference to the following accompanying drawings depicting examples embodying the best mode for practicing the invention.

Fig. 1 is a diagrammatical perspective view of a computer disk drive including a disk drive servo control system of this invention.

Fig. 2 is a simplified block diagram of a typical disk drive servo control system having a compensator optimization block implementing a servo gain correction factor and a plant optimization block representing physical components of the hard drive system depicted in Fig. 1.

Fig. 3 is a block diagram of one possible topology for implementing the servo control system of Fig. 2.

Fig. 4 is a block diagram illustrating one possible implementation of a magnetoresistive head gain correction configured according to the topology of Fig. 2.

Fig. 5 is a graph illustrating an exemplary magnetoresistitve head gain variation before and after correction.

## DETAILED DESCRIPTION OF THE INVENTION

Figure 1 shows a disk drive date storage device 10 including a disk drive servo system 11 having a stacked array 12 of multiple magnetic hard disks 14-17 aligned substantially along a central axis of rotation 18. The magnetic disks 14-17 have associated, centrally located hubs (referenced generally by numeral 13) and are separated from one another by interposed spacers. The magnetic disks 14-17 are rotatably carried by a stationary support, or frame 21 via a spindle assembly 20 empowered for rotatable motion by a motor or other drive mechanism (not shown) to spin about axis 18 at a substantially constant operating speed. The spindle assembly includes a top clamp 19 for retaining the disk 14-17 in rotationally fixed relation with interleaved adjacent disks and interposed spacers along associated disk hubs 13. Details of the spindle assembly and a portion of the support supporting the disk array are of a conventional design and are therefore not described herein in any detail except as necessary to describe the present invention. A head/arm assembly 22 is rotatably positioned adjacent to the stacked disk array 12 by way of a servo motor 24 configured to rotatably position the assembly relative to a fixed support member 26. The head/arm assembly includes a support arm 28 formed by a comb-like array of individual carrier arms 30 carried by the support member 26 and accurately positioned for rotation by activation of the servo motor 24 relative to support member 26 and array 12. The support arm 28 is typically of a two-part construction including carrier arm 30, defining a proximal end 32, and a suspension member 34 that is swaged, spot welded, or otherwise fastened to the arm portion to define the distal end 36.

A servo head 38 is mounted at distal end 36 of the suspension member 34. The support arm is pivotally connected relative to the disk drive data storage device 10 at a location spaced from the servo head 38 which allows for rotational positioning of the servo head over a corresponding surface of the hard disk. The servo head is formed by a gimble assembly including a slider physically connected via a gimble mount to carrier arm 30 and the servo head installed on the slider. Similarly, the plurality of read/write heads (not shown) are mounted on similarly situated carrier arms 30 aligned beneath arm 30 as depicted in Figure 1 such that one or two arms are provided for each magnetic disk 14-17. Only one carrier arm 30 is completely shown in Figure 1, wherein a servo head 38 is mounted at the distal end to detect positioning of the servo head with respect to a desired servo track of pre-recorded positioning information, and wherein the other carrier arms are aligned directly beneath arm 30. The rotatable carrier arms are thereby movable relative to storage disks 14-17 such that positioning of servo head 38 likewise rotatably positions each respective read/write head and carrier arm through motion of servo motor 24. The read/write heads magnetically read/record information from/to corresponding surfaces on storage hard disks 14-17 during operation.

According to this arrangement, the carrier arm 30 supports and radially positions the read/write heads across a surface of each disk 14-17 as support arm 28 is controllably rotated about axis 27. The slider rotates the servo head 38 by way of an accompanying gimble assembly to insure the servo head, as well as each read/write head will maintain substantially parallel alignment with each data track, thereby essentially eliminating any effects of head skew. When a support arm and a head are rotated bringing the head across the full range of tracks on a disk, the head will cross each of the tracks at varying angles depending on the radial position along the disk due to the arcuate path motion of the head as it rotates across the surface of the disk. In the past, for earlier designs that had a head rigidly fixed to the arm, data tracks had to be spaced apart a greater distance in order to reduce the effects of this head skew problem. However, the need to provide as much data storage on as many tracks as possible on a particular disk surface required that the heads be aligned with the tracks as they rotate. The slider and gimble insures proper rotation of the head in order to substantially eliminate head skew with respect to each track on each disk.

The servo head 38 is a magnetoresistive head having a current-carrying Hall plate that changes in resistance when acted upon by a magnetic field and imparted by the regions forming a track 40 on disk 14. Alternatively, the servo head can be an inductive head producing time, varying voltages and/or currents as a result of time-varying magnetic fields detected from a track 40 on the disk 14.

The servo motor 24 depicted in Figure 1 moves the servo head 38 and corresponding read/write heads (not shown) there below to desired locations on surfaces of disk 14-17 pursuant to a position map read by the servo head 38 in the form of servo position information prerecorded onto top surface 42 for the case of a dedicated servo disk drive. The servo controlled motor 24 is carried in association with the support arm 28, and is constructed and arranged to actuate positioning of the support arm and the head to a desired track on the surface of the hard disk 14. A servo control system 60 receives the servo off-track position as input measured by the servo head, then outputs position command signals to the motor. Servo head 38 produces an output signal delivered to the servo control system 60 indicative of positioning of the servo head in relation to a desired track. Servo head 38 determines centered position along a track 40 by detecting portions of the adjacent strips formed by magnetized regions 44 and 46 as well as spaces 48. The servo head detects track center by detecting presence of a larger signal on one side in relation to the other side. The left and right sides of servo head 38 are configured in side by side positions that are spaced apart in a radial direction along the disk. Ideally, the servo head picks up substantially the same amount of signal on both the left and right sides when on track center.

For the case of the magnetoresistive servo head 38, a left and a right voltage signal corresponding to detected flux variations are compared. Servo head 38 preferably measures voltages induced on left and right sides and compares the left and right voltages to detect position of the head with respect to a track. Servo motor 24 is formed by a voice-coil motor consisting essentially of a permanent magnet, a moving electromagnetic coil, and a sensor configured to detect position of the coil, wherein the motor is activated by input commands, or tracking instructions received from the servo control system 60 in response to inputs delivered to system 60 from the servo head 38. The motor moves the support arm 28, including the comb-like assembly of support arms 28 rotationally toward or away from the center of the disk while the gimbles on the servo head and the read/write heads substantially prevent head skew from occurring.

As shown in Figure 1, the magnetic disks 14-17 form a dedicated servo disk drive 10. Each disk has have a top and bottom side, or surface, with each surface having many concentric tracks 40 for storing data and/or servo information. In the implementation depicted in Figure 1, top surface 42 on hard disk 14 has a track 40 of servo position information formed by a layer of magnetic media on the rotating surface of the hard disk, thereby forming a data storage device. Alternatively, a bottom surface of disk 14 (not shown) as well as top and bottom surfaces of disks 15-17 have many concentric tracks on each side for storing data to be read by read/write heads (not shown) carried by the comb-like array of carrier arms on support arm 28 via accompanying suspension members 34. For the case of the top surface 42, the entire top side of disk 14 is dedicated to carrying pre-recorded servo position information, preferably magnetically encoded onto the side with a servo writer once the array 12 of disks 14-17 have been rigidly assembled together with the top clamp 19.

As shown by the enlarged circle region of Figure 1, the top surface 42 of disk 14 receives servo position information laid down by a servo writer in a manner that facilitates tracked positioning of the servo head, as well as corresponding read/write head on neighboring disks. The servo position information describes servo head position in the radial direction as well as angular position resulting from rotation of the array 12. The servo information is realized on the top surface of disk 14 as areas of opposite magnetization 44 and 46, respectively. Areas 44 and 46 are separated by unmagnetized spaces 48. The alternating configuration of areas 44 and 46 laid out in spaced apart relation by unmagnetized spaces 48 imparts the appearance of stripes to the servo head 38 as it is rotatably positioned by servo motor 24 there below. Tracks of information are then laid down on the remaining disk surfaces in alignment with the associated read/write heads corresponding to the servo head tracking along the stripe of surface 42. The servo head 38 is rotatably moved to a centered position where it reads equal portions of adjacent stripes, similar to a car straddling a center line of a road as visually perceived by a driver. The centered position of the track 40 of servo position information forms a boundary between adjacent stripes depicted generally by a track line 50. Track line 50 is configured on the top surface 42 of disk 14 in a position that corresponds to a data track on the bottom surface of disk 14 as well as top and bottom surfaces of disks 15-17 configured substantially identically there below.

A top surface 51 of disk 15 is shown in breakaway in Figure 1 to expose one exemplary data track 53 corresponding to track line 50. In this manner, servo head 38 can track relative positions of read/write heads identically configured there below to obtain relative positioning information with respect to each of the data tracks formed on the remaining top and bottom surfaces of accompanying disks there below.

Servo head 38 is actually a silicon-based thin film head that is mounted onto an aerodynamic slider forming part of the servo head gimble assembly. The slider is physically connected via a gimble mount to the actuator arm 30 and the servo head 38. The slider forms a flying head that eliminates head wear and disk abrasion by floating the servo head a few millionths of an inch from the disk surface on a thin cushion of air produced by the rapidly spinning array 12. Alternatively, when implementing an embedded servo disk drive system, the servo head is formed by the read portion of a read/write head. Each disk has thin "pie-shaped" slices reserved for servo information interspersed between larger "pie-shaped" regions for data storage. Furthermore, the slider supporting the head can be formed from a substrate which supports two separate elements: the read head and the write head, wherein the read head is used in an alternating, or intermittent manner as the servo head. In another construction, the read and write heads can be placed on a single chip provided on a common slider, or substrate which is then glued to a metal flexure similar to suspension member 34. In both cases, servo head 38 must be moved slightly in the radial direction an offset amount to account for the lateral distance between the assembled read and write heads when operating between read and write modes so as to maintain positioning of each head atop a desired track as it is being written to/read from, correspondingly.

For the case where magnetic disks 14-17 of Figure 1 are implemented in an embedded servo disk drive configuration, many concentric embedded tracks 52 similar to the dedicated track 53 on disk 15 of a dedicated servo disk drive configuration are provided on the sides of each disk for storing data and servo information. For this case, tracks 52 in this implementation are divided into numerous circumferentially spaced regions or sectors (as represented by the pie-shaped dashed lines shown alternatively in Figure 1 in breakaway section. Lines 52 represent data storage tracks similar to that of a dedicated track 53, but also include embedded information. The regions or sectors of disk 14 when configured in the embedded configuration can be generally classified as data segments 54 and "inter-sector" servo gaps 56. The data segments 54 are relatively large pie-shaped wedges which store reported bits of data within tracks 40. The servo gaps 56 are analogous to the unmagnetized spaces 48 formed when imparting servo information to the disk surface of a dedicated hard drive. Each servo gap 56 is a relatively small pie-shaped region interspersed between data segments 54 for storing some tracking information within tracks 53.

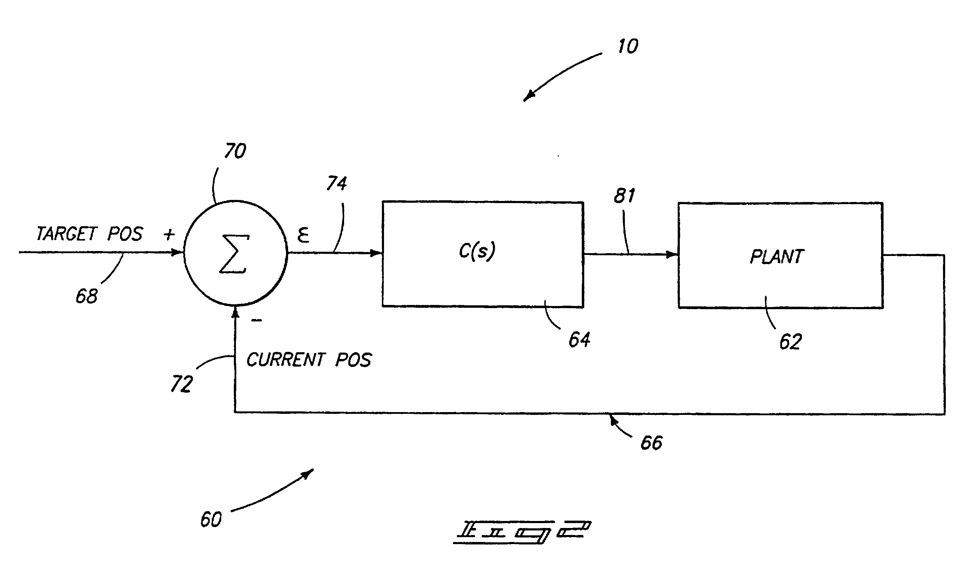

Referring to Figure 2, the servo control system 60 forms a dynamic system control model consisting of a disk drive servo system for controlling positioning of the servo head 38 along a track line 50 (the center of track 40) and corresponding read/write tracks heads along data tracks 53 in order to follow a desired track 40 of magnetic media on a rotating surface 42 of the hard disk 14 of a data storage device such as disk drive 10. The servo control system 60 represents a dynamic system response model configured to control and stabilize dynamic response performance for a physical system referred generally as Plant 62, in this case the physical system components comprising disk drive 10. Additionally, a controller, or compensator 64 provides a second element within a feedback servo control loop 66, forming the servo control system 60. A desired, or target position 68 provides a positive input to an adder 70. A detected, or current position 72 is then input as a negative feedback to adder or summing point 70. As a consequence, an offset or tracking error ($\varepsilon$) 74 is input from adder 70 to compensator 64. The servo control 60, by way of feedback loop 66 provides a servo control loop which, in association with the servo head 38 and the servo controlled motor 24 imparts a dynamic system response wherein a steady-state response over an extended period of time tends to realize a steady and accurate placement of servo head 38 over a desired track 40. For purposes of this disclosure, track line 53 is considered to be the centered position of track 40 formed between adjacent stripes defined by alternating positive/negative/non-magnetized areas 44, 46 and 48, respectively, as discussed above. In this manner, a tracking controller configuration is provided for dynamically adjusting position of servo head 38 over a desired track 40 which concurrently tracks corresponding read/write heads on corresponding desired tracks of magnetic media provided on the remaining rotating surfaces, or sides of hard disk 14-17 being used for storing data. In this manner, the read/write head accuracy can be maintained, particularly where runout and/or wobbliness are found in data written to the heads, as wells as when attempting to read data from a disk.

Compensator 64 as configured within closed loop control system 60 performs compensation by attempting to physically alter the closed-loop system such that system 60 will have specified characteristics. This physical alteration is achieved by changing certain parameters in the system. Alternatively, changes could be made to the physical system or Plant 62 in order to implement the physical alterations. In some cases, alterations are made both to the physical system, or Plant 62 as well as to the controller 64. Preferably, a disk drive 10 is tested after manufacture in order to determine, or characterize the characteristics defining Plant 62. Subsequently, compensator 64 is tuned, or configured to realize a system having a desirable transfer function in relation to the transfer function of Plant 62 such that compensation is performed to impart a desired tracking controller configuration having a desirable step response. The step response imparts a suitable damping coefficient to realize a fast, yet acceptable dynamic system response pursuant to tracking errors 74 realized between the servo head 38 and a desired track 40. The dynamic system control model 60 will be designed based on classical design procedures utilizing a transfer-function model of a system. Alternatively, modern design procedures based on a state-variable model of the Plant 62 can be used to realize a state-variable model or state model for a single-input-single-output Plant 62, after which an equivalent compensator 64 can be realized via a pole-placement design. Plant 62 includes a model of the servo head 38 which defines the physical characteristics of the servo head, as well as the support member 26 and servo motor 24.

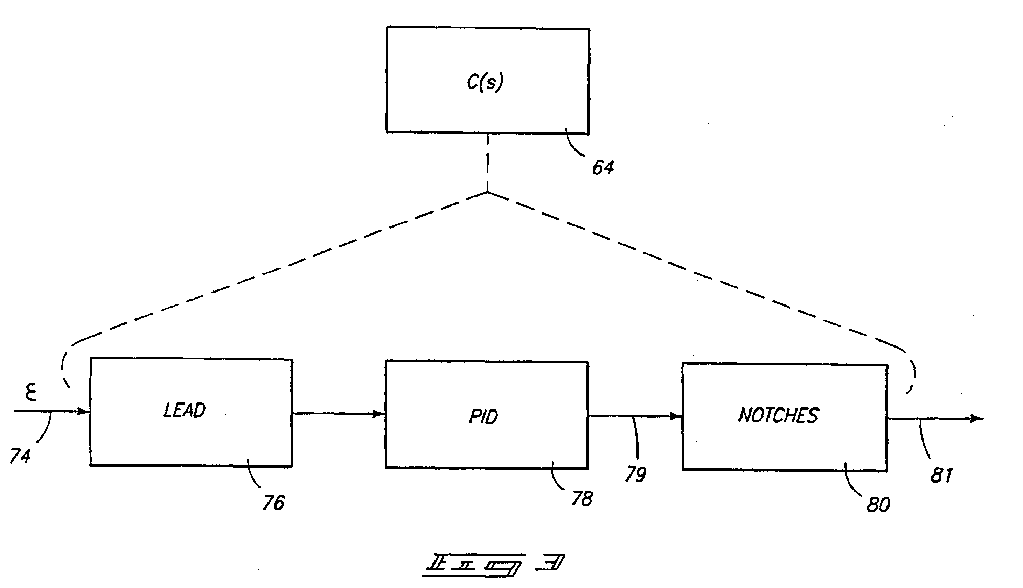

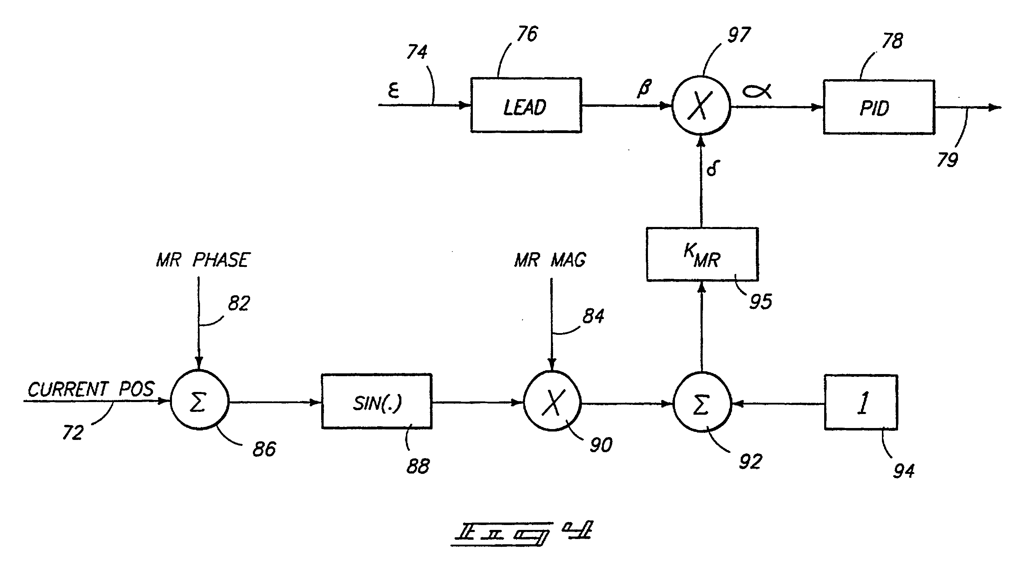

Figure 3 illustrates a topology suitable for implementing the compensator 64. The compensator, C(s), indicated by reference numeral 64 is generally made up of notch filters, a proportional plus integral plus derivative (PID) controller, and other optimization blocks. As shown in Figure 3, compensator 64 includes optimation blocks for Lead, or phase-lead compensation 76, a PID controller 78, and notch filters 80. Figure 3 shows one possible implementation for realizing a desired topology for compensator 64. The compensator receives a tracking error 74 as an input and outputs a compensated signal 81. Assuming the topology of Figure 2, one possible implementation for head gain correction, particularly for a magnetoresistive (MR) head is illustrated generally in Figure 4. Preferably, dynamic control system model 60 is configured with block elements, or controllers designed to make the system behave like a second-order system in order to make analysis more manageable to a system designer.

Lead 76 of Figure 3 provides phase-lead compensation by way of a phase-lead network preferably configured as a second-order system. The phase-lead network receives the tracking error 74 and increases the phase-lead at a cross over frequency in order to meet a desired performance specification with respect to the phase. A suitable phase-lead-compensating network will have a transfer function defining a pair of poles and a pair of zeros. In general, the zeros of the transfer function which are found in a numerator of the transfer function will typically be lower in frequency than the poles of the transfer function found in the denominator. A suitable transfer function G(s) for lead 76 is depicted generally by equation 1 below:

$$\text{Equation 1:} \qquad G(s) = \frac{K\,[s^2 + as + b]}{[s^2 + cs + d]}$$

wherein K is a weighting constant, values for s in the numerator define the zeros, and values for s in the denominator define the poles. Essentially, the poles and zeros can be tailored by selecting suitable values for a, b, c and d, the resulting poles and zeros imparting a desired phase-lead network, either increasing the phase-lead, or reducing the phase lag, at the cross over frequency in order to achieve a desired result. The cross over frequency is the frequency where the magnitude of the open-loop gain is one, or unity. Essentially, adjustments to lead 76 help to set the dynamics of the control loop 66 to achieve a desired response. Essentially, the lead network adds phase advance which is desirable in order to have certain gain characteristics at the gain cross over frequency. In other words, realized lead is configured in order to have stability within the closed loop of the system.

For cases where fast response is desired, as little phase as possible should be realized. For example, 30 degrees of phase, or phase margin (PM) proves suitable as the gain goes through the 0 db point. However, in this configuration it is possible that the system might over shoot the desired target parameter, the system oscillating back and forth with little damping due to the resulting system having a long standing and generally exponentially decaying stability component. However, if speed is not as important, it is desirable to impart more phase-lead at the point of the cross over frequency. As a result, a critically damp system is achieved which might never cross over the desired target value, and with this damped system it takes a significant duration of time to approach the target value. However, with the disk drive system 10, speed tends to be desirable, and as a result, preferably a 30 degree phase margin is preferred, and a range of 25 degrees - 35 degrees of phase margin provides such a suitable result. In summary, lead 76 operates on servo tracking error, or off-set 74 to output a magnitude and phase having certain desired characteristics, and the transfer function is configured in order to realize these characteristics.

PID controller 78 of Figure 3 is a proportional plus integral plus derivative control system in which output comprising a servo activating command is proportional to a linear combination of input, time integral of input, and time rate-of-change of input. The proportional control system is configured to impart a desired phase. The integral control system has integral action configured to impart a desired set point. The integral control system is configured to drive steady state tracking errors to zero. The derivative control system is configured to shape desired characteristics of the servo control loop realized in the form of a suitable transfer function. Alternatively, PID 78 can be replaced with just the integral control system portion in order to impart a desired set point. Likewise, PID 78 can be replaced with the proportional control system and the integral control system which together impart a desired phase shift and a desired set point.

One desirable feature of PID controller 78 is the ability to implement an integral control system which imparts integral action in order to achieve a desired set point. Furthermore, PID controller 78 performs additional filtering. Typically, the integral control system forces you to a desired set point. However, an accompanying phase shift is also produced. Therefore, the proportional control system is also imparted to offset the resulting phase shift from the integral control system. Essentially, the parameters for each of the components of the PID controller are adjusted or "tweaked" in order to produce a desirable resulting overall transfer function for the PID controller. However, the overall function of the PID controller is to drive the error signal to zero or essentially drive the steady state errors of the system to a zero value via an output signal 79.

Preferably, PID controller 78 is realized with a second order transfer function depicted generally below:

$$\text{Equation 2:} \qquad G(s) = \frac{K\,[s^2 + as + b]}{s}$$

wherein the values for a and b are adjusted to realize a desired pair of zeros and a desired single pole. By placing the zeros in appropriate locations (configuring them with suitable values), the transfer function can be sculpted to realize a set of suitable characteristics described generally above for a particular control implementation of model 60.

Notch filters 80 are implemented in the compensator 64 of Figure 3 in order to eliminate the frequency components of signals that might otherwise electrically excite resonance within the control model 60, especially within the mechanical components of Plant 62. Essentially, notch filters 80 form band-reject filters which remove frequency components of an input signal corresponding to resonant frequencies of the structure according to Plant 62. Preferably, each notch filter has a second order transfer function generally configured as shown above by equation 1. Such a transfer function has a pair of zeros and a pair of poles; by adjusting values for a, b, c and d, the positions of the poles and zeros can be moved around, or "tweaked" in an iterative manner in order to achieve a desired depth and width of frequency rejection for each band-reject filter implementation. Essentially, a suitable transfer function will be realized for each notch filter that is implemented via notches 80. Therefore, notches 80 includes at least one band-reject filter configured to filter out input energy to the servo system represented by Plant 62, wherein the band reject filter is operable to minimize phase contribution at a gain cross over for the servo system.

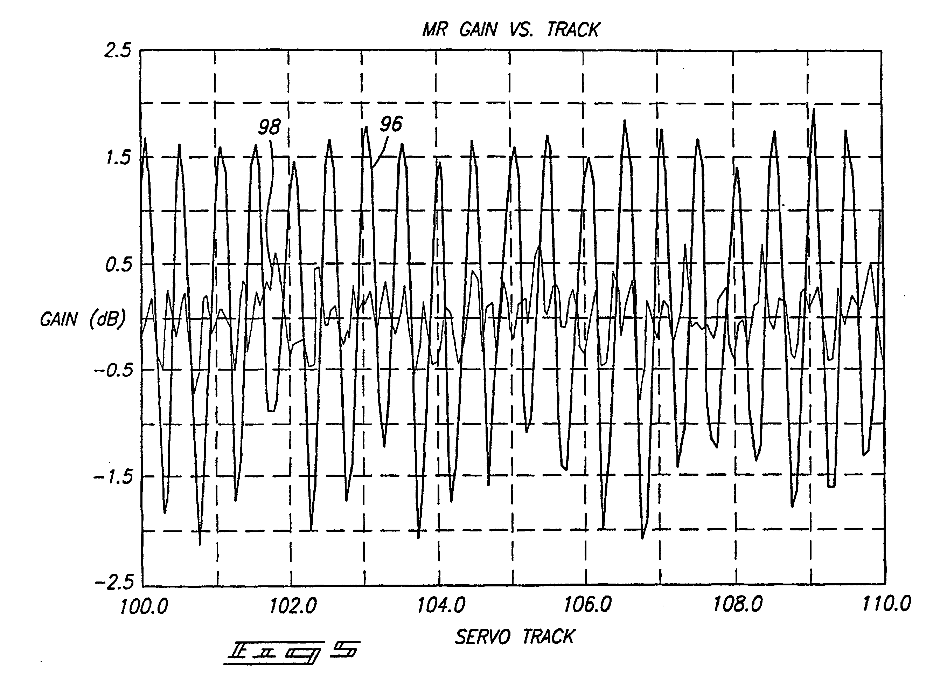

Figure 4 illustrates one possible implementation of servo head gain correction according to the general topology illustrated in Figure 3. Figure 4 is implemented with a magnetoresistive (MR) servo head 38 that produces gain variations generally sinusoidal in nature as a function of track displacement. Namely, the servo gain variations are a function of the position of servo head 38 with respect to each of tracks 40 on the side 42 of disk 14. The general sinusoidal nature of servo head gain variations are illustrated in Figure 5, discussed below. Gain variations encountered by the servo head can be large enough to impart stability problems for the overall dynamic system control model 60. Therefore, a sine wave gain correction is implemented in the servo control system 60 in such a manner that the sine wave gain correction is a function of track position, thereby substantially canceling out the sinusoidal gain variation.

Typically, a particular sine wave gain correction term needed to impart a suitable sine wave or sinusoidal gain correction is learned in the factory for each servo head after it is fully assembled, which enables a system designer to characterize the resulting transfer function for the Plant 62. Experimental results have shown a realized reduction in gain variations for a magnetoresistive servo head on the order of a factor of two by utilizing this method. To learn the correction term, the nature of the servo head gain variation must be suitably characterized, as will be discussed below. In operation, compensator 64 implements the sinusoidal gain correction configured as a sine wave applied as a best or closest fit to substantially correct any servo gain variations.

According to the implementation of Figure 4, a lead output $\beta$ is produced by the lead stage after which it is multiplied by a gain term $\delta$ that is a function of track position, or relative position between the servo head and tracks 40. For the case where

$\beta =$     Lead Output
$\delta =$     MR Gain Correction Output

$$\alpha = \quad \beta \bullet \delta$$

the MR gain algorithm is defined by the following equation:

$$\text{Equation 3: } (\mathit{CurrentPos}) = K_{MR}*(1 + MR_{mag}*sine\,(\mathit{CurrentPos} + MR_{Phase}))$$

Pursuant to Figure 4, values for MR phase and MR magnitude are learned in a factory for a particular servo head 38 and accompanying hard drive physical structure forming Plant 62. Preferably, corresponding values for MR head gain variation (phase and magnitude) are measured using a least squares fit implemented by using a least squares fit filter. Accordingly, for a particular manufactured MR servo head 38, the head is passed across a series of tracks in order to measure gain preferably in 5% increments thereby enabling construction of a transfer function. By passing the particular head across, for example ten tracks and measuring values in 5% increments over each track, a general sine wave signature can be characterized as depicted generally in Figure 5. Once the particular sine wave for a given servo head is characterized, a best fit for the entire curve can be applied by way of a least squares filter. For the case of Figures 4 and 5, twenty steps, each having a 5% increment of track wide, track-to-track, produces passage of a head completely over the range of a single track 40. Accordingly, current position 72 is combined by a summer 86 which is input in combination with MR phase values 82 to produce an output that maps to a corresponding sine wave value to produce a corresponding sinusoidal gain correction term 88. Gain term 88 outputs a sinusoidal gain correction term to a multiplier 90 wherein the gain term is multiplied by a corresponding MR magnitude value 84. Summer 92 then applies a unity level shift 94 to the value output from the multiplier 90. The level shifted output of summer 92 is then multiplied by a head weighting factor $K_{mr}$ 95 in order to produce a desired gain relationship for the value of the MR Gain Correction Output $\delta$.

Summer 86, in operation combines inputs in order to match an appropriate phase relationship for a particular servo head and track orientation interface which produces a suitable sine wave characterization. Essentially, sine table 88 is configured as a look up table having a complete cycle of a sine wave configured to correlate positions, preferably identified by percent of positions laterally offset from a track. Each lateral off-track position of the servo head corresponds to a sine wave value of gain. Therefore, a value for current position input to summer 86 can be correlated with a gain value which is looked up in the sine table 88, producing a sine gain value which, when operated by sinusoidal gain correction imparts suitable gain correction. Subsequently, the gain correction value is multiplied by an MR magnitude value 84, after which the level is shifted to a unity gain value and operated on by head weighting factor $K_{mr}$. The result is MR gain correction output $\delta$, which is then multiplied by lead output $\beta$ at multiplier 97 to produce a gain corrected lead output value $\alpha$. The gain corrected lead output value $\alpha$ is then input to PID controller 78. The PID controller delivers an output signal 79 to notches 80 of Fig. 3, which then produces an output signal 98, as shown is Fig. 5. Output signal 98 is used to activate the servo motor 28 depicted in Fig. 1. Alternatively, a separate dedicated PID controller can be used to implement this portion of control.

Figure 5 illustrates an exemplary magnetoresistive (MR) head gain variation before and after correction according to the implementation of Figure 4. MR head gain 96 shows a generally large amplitude and sinusoidal signal characterizing gain over a range of track positions. According to Figure 4, the sine wave characterization of gain is depicted for measurements taken at 5% increments over ten tracks; namely, tracks "100" through "110". The gain indicates an open loop gain value of the positioning loop for each 5% incremental position between tracks. In this manner, twenty different gain values are measured at 20 points extending from one track to a second neighboring track. Subsequently, a least squares fit is performed on the data in order to characterize servo head gain 96 variations as a sine wave function. Subsequently, a closely matched gain correction factor is sized and placed in phase according to the implementation of Figure 4 and it is fed into loop 66, producing the corrected MR head gain 98. A substantial decrease in head gain variation can be readily seen by comparing values for gain 96 before correction and values for gain 98 after correction by applying a sinusoidal gain correction output $\delta$ by way of sine table 88. Essentially, corrected gain 98 consists of a measured residual gain from servo head 38 as it passes over a plurality of tracks, similar to track 40 extending between tracks number 100-110 as implemented according to Figure 4.

Furthermore, a visual inspection of Figure 5 shows that for a servo head 38 centered on a track 40, an incremental lateral movement to an off-set in left and right directions does not necessarily produce an identical change in servo head gain. An alternative, but less preferred method for correcting such a gain would require implementing a gain correction which utilizes two different linear fits to attempt an approximation to each sine wave pulse since left and right off-sets can create different changes in gain, having different slopes, each requiring a different linear fit. However, the sinusoidal gain correction implemented in this invention produces a very effective corrected head gain 98 as indicated in Figure 5, even for differing left/right gain variations from a center track position. Essentially, the head gain 96 is corrected according to this invention, and as a result of the gain correction, dynamic system control model 60 is better able to correct positioning of servo head 38 over a particular track 40. Therefore, corresponding read/write heads are also more accurately positioned over a corresponding data track when storing/reading data or information during read/write operations.

In summary, the method of this invention for controlling positioning of a servo head 38 following a track 40 of magnetic media on a rotating surface of a hard disk of a data storage device comprises several steps. First, the hard disks 14-17 are moved in rotation about a support of the data storage device 10. Then a support arm 28 is provided having a servo head 38 and a servo controlled motor 24 for moving the arm and the servo head. The servo head is configured to read pre-recorded positioning information (44,46 and 48) on the desired track, and the support arm is connected relative to the data storage device at a location spaced from the head to allow for positioning of the head over a desired track in the surface of the hard disk. The servo controlled motor is constructed and arranged to actuate positioning of the arm and the head to the desired track on the surface of the hard disk. Additionally, a servo control loop is provided in association with the servo head and the servo controlled motor. The servo control loop comprises a compensator configured to implement a sinusoidal gain correction to correct servo gain variations resulting as a function of relative position differences between the servo head and the desired track. The servo control loop is configured to receive an input signal characterizing relative position differences between the servo head and the desired track, and deliver an output to activate the servo controlled motor. The relative position differences result from acircular perturbations of the track relative to the servo head. The servo head is carried in a position adjacent the disk as the disk rotates with respect to the head which causes corresponding variations in the servo gain. Furthermore, the position of the head with respect to a desired track is detected, and servo gain variations are compensated for by applying a sine wave correction factor to substantially offset servo gain variations resulting from acircular perturbations of the track relative to the head to facilitate repositioning of the head over the track.

**Claims**

1. A disk drive servo system (11) for controlling positioning of a head (38) in order to follow a desired track (40) of data carried by magnetic media on a rotating surface (42) of a hard disk (14) of a data storage device (10), the servo system (11) comprising:

   servo head (38) configured to read pre-recorded positioning information on the desired track (40);

   a support arm (28) receiving the servo head (38), the support arm (28) being connectable relative to the data storage device (10) at a location spaced from the head (38) to position the head (38) over the desired track (40) on the surface (42) of the hard disk (14);

   a servo controlled motor (24) associated with the support arm (28) and constructed and arranged to actuate positioning of the arm (28) and the head (38) to the desired track (40) on the surface (42) of the hard disk (14); and

   a servo control loop (66) associated with the servo head (38) and the servo controlled motor (24), the servo control loop (66) comprising:

      compensator (64) configured to implement a sinusoidal correction (88) to correct servo gain variations (96) resulting as a function of relative position differences between the servo head (38) and the desired track (40), the servo control loop (66) being configured to receive an input signal (74) characterizing the relative position difference between the servo head (38) and the desired track (40) and deliver an output (81) to activate the servo controlled motor (24) to move the support arm (28) to reposition the head (38) to substantially correct the relative position difference, relative position differences resulting from acircular perturbations of the track (40) relative to the servo head (38) while the servo head (38) is carried in a relative fixed position adjacent the disk (14) as the disk (14) rotates with respect to the head (38) which causes corresponding variations in the servo gain (96);

      **characterized by** said compensator (64) being configured to implement said sinusoidal correction (88) as a gain correction applied to substantially offset the servo gain variations.

2. The disk drive servo system (11) of claim 1 wherein the sine wave gain correction is applied as a best fit.

3. The disk drive servo system (11) of claim 1 wherein the servo control loop (66) comprises a phase lead compensation network (76) configured to impart a phase advance to a gain of the servo head (38) to achieve desirable gain characteristics at a gain crossover frequency.

4. The disk drive servo system (11) of claim 1 wherein the servo control loop (66) comprises a proportional plus integral control system (78) in which output comprising a servo activating command is proportional to a linear combination of input and time integral of input, the integral control system (78) having integral action configurable to impart a desired set point and the proportional control system (78) configurable to impart a desired phase shift.

5. The disk drive servo system (11) of claim 1 wherein the servo control loop (66) comprises a proportional plus integral plus derivative control system (78) in which output comprising a servo activating command is proportional to a linear combination of input, time integral of input, and time rate-of-change of input, proportional control system (78) configurable to impart a desired phase shift, the integral control system (78) having integral action configurable to impart a desired set point, and the derivative control system (78) being configured to drive steady state tracking errors to zero and shape desired characteristics of the servo control loop (66) realized in the form of a transfer function.

6. The disk drive servo system (11) of claim 1 wherein the servo control loop (66) comprises at least one band reject filter (80) configured to filter out input energy to the servo system (11) corresponding substantially to resonant frequencies of the servo system (11), the band reject filter (80) being operable to minimize phase contribution at a gain crossover for the servo system (11).

7. The disk drive servo system (11) of claim 1 wherein the servo control loop (66) comprises a plant (62) including the support arm (28) and the servo head (38), the plant (62) having a transfer function associated therewith.

8. The disk drive servo system (11) of claim 1 wherein the servo control loop (66) is configured to realize a transfer function enabling realization of a desired head (38) and track (40) interface alignment across the surface (42) of the disk (14).

9. The disk drive servo system (11) of claim 1 wherein the servo gain (96) variations are characterized with a least squares fit, enabling implementation of the sinusoidal gain correction (88).

10. A method for controlling a positioning of a servo head (38) following a track (40) of magnetic media on a rotating surface (42) of a hard disk (14) of a data storage device (10), the method comprising the steps of:

  moving the hard disk (14) in rotation about a support of the data storage device (10);

  providing a support arm (28) having a servo head (38) and a servo controlled motor (24) for moving the arm (28) and the servo head (38), the servo head (38) configured to read pre-recorded positioning information on the track (40), the support arm (28) being connected relative to the data storage device (10) at a location spaced from the head (38) for positioning the head (38) over a desired track (40) in the surface (42) of the hard disk (14), and the servo controlled motor (24) constructed and arranged to actuate positioning of the arm (28) and the head (38) to the desired track (40) on the surface (42) of the hard disk (14);

  providing a servo control loop (66) associated with the servo head (38) and the servo controlled motor (24), the servo control loop (66) comprising a compensator (64) configured to implement a sinusoidal gain correction (88) to correct servo gain variations (96) resulting as a function of relative position differences between the servo head (38) and the desired track (40);

  the servo control loop (66) being configured to receive an input signal characterizing relative position differences between the servo head (38) and the desired track (40) and deliver an output to activate the servo controlled motor (24), the relative position differences resulting from acircular perturbations of the track (40) relative to the servo head (38) while the servo head (38) is carried in a position adjacent the disk (14) as the disk (14) rotates with respect to the head (38) which causes corresponding variations in the servo head gain (96);

  detecting the position of the head (38) with respect to a desired track (40); and

  compensating the servo gain variations (96) by applying a sine wave correction factor (88) to substantially offset servo gain variations (96) resulting from acircular perturbations of the track (40) relative to the head (38) to facilitate repositioning of the head (38) over the track (40).

**Patentansprüche**

1. Ein Plattenlaufwerk-Servosystem (11) zum Steuern eines Positionierens eines Kopfes (38), um eine gewünschte Spur (40) von Daten zu verfolgen, die durch ein magnetisches Medium auf einer sich drehenden Oberfläche (42) einer Festplatte (14) einer Datenspeichervorrichtung (10) getragen werden, wobei das Servosystem (11) folgende Merkmale aufweist:

   einen Servokopf (38), der konfiguriert ist, um vorab aufgezeichnete Positionierungsinformationen auf der gewünschten Spur (40) zu lesen;

   einen Trägerarm (28), der den Servokopf (38) aufnimmt, wobei der Trägerarm (28) relativ zu der Datenspeichervorrichtung (10) an einer von dem Kopf (38) beabstandeten Position verbindbar ist, um den Kopf (38) über der gewünschten Spur (40) auf der Oberfläche (42) der Festplatte (14) zu positionieren;

   einen servogesteuerten Motor (24), der dem Trägerarm (28) zugeordnet ist und aufgebaut und angeordnet ist, um ein Positionieren des Armes (28) und des Kopfes (38) auf die gewünschte Spur (40) auf der Oberfläche (42) der Festplatte (14) zu betätigen; und

   eine Servosteuerschleife (66), die dem Servokopf (38) und dem servogesteuerten Motor (24) zugeordnet ist, wobei die Servosteuerschleife (66) folgende Merkmale aufweist:

      einen Kompensator (64), der konfiguriert ist, um eine sinusförmige Korrektur (88) zu implementieren, um Servoverstärkungsvariationen (96), die sich als eine Funktion relativer Positionsunterschiede zwischen dem Servokopf (38) und der gewünschten Spur (40) ergeben, zu korrigieren, wobei die Servosteuerschleife (66) konfiguriert ist, um ein Eingangssignal (74), das den relativen Positionsunterschied zwischen dem Servokopf (38) und der gewünschten Spur (40) charakterisiert, zu empfangen und ein Ausgangssignal (81) zu liefern, um den servogesteuerten Motor (24) zu aktivieren, um den Trägerarm (28) zu bewegen, um den Kopf (38) neu zu positionieren, um den relativen Positionsunterschied im wesentlichen zu korrigieren, wobei sich relative Positionsunterschiede aus nicht-kreisförmigen Störungen der Spur (40) relativ zu dem Servokopf (38) ergeben, während der Servokopf (38) in einer relativen feststehenden Position benachbart zu der Platte (14) getragen wird, während sich die Platte (14) bezüglich des Kopfes (38) dreht, was entsprechende Variationen bei der Servoverstärkung (96) bewirkt;

   **dadurch gekennzeichnet, daß** der Kompensator (64) konfiguriert ist, um die sinusförmige Korrektur (88) als eine Verstärkungskorrektur zu implementieren, die angewandt wird, um die Servoverstärkungsvariationen im wesentlichen auszugleichen.

2. Das Plattenlaufwerk-Servosystem (11) gemäß Anspruch 1, bei dem die Sinuswellenverstärkungskorrektur als eine beste Passung angewandt wird.

3. Plattenlaufwerk-Servosystem (11) gemäß Anspruch 1, bei dem die Servosteuerschleife (66) ein Phasenvoreilungskompensationsnetz (76) aufweist, das konfiguriert ist, um einer Verstärkung des Servokopfes (38) eine Phasenvoreilung zu verleihen, um wünschenswerte Verstärkungscharakteristika mit einer Übergangsfrequenz zu erzielen.

4. Das Plattenlaufwerk-Servosystem (11) gemäß Anspruch 1, bei dem die Servosteuerschleife (66) ein Proportional-Plus-Integral-Steuersystem (78) aufweist, bei dem ein Ausgangssignal, das einen Servoaktivierungsbefehl aufweist, zu einer linearen Kombination eines Eingangssignals und eines Zeitintegrals des Eingangssignals proportional ist, wobei das Integral-Steuersystem (78) eine Integral-Aktion aufweist, die konfigurierbar ist, um einen gewünschten eingestellten Punkt zu gewähren, und wobei das proportionale Steuersystem (78) konfigurierbar ist, um eine gewünschte Phasenverschiebung zu gewähren.

5. Das Plattenlaufwerk-Servosystem (11) gemäß Anspruch 1, bei dem die Servosteuerschleife (66) ein Proportional-Plus-Integral-Plus-Ableitung-Steuersystem (78) aufweist, bei dem ein Ausgangssignal, das einen Servoaktivierungsbefehl aufweist, zu einer linearen Kombination eines Eingangssignals, eines Zeitintegrals des Eingangssignals und einer Zeitveränderungsrate des Eingangssignals proportional ist, wobei das proportionale Steuersystem (78) konfigurierbar ist, um eine gewünschte Phasenverschiebung zu gewähren, wobei das Integral-Steuersystem (78) eine Integral-Aktion aufweist, die konfigurierbar ist, um einen gewünschten Einstellpunkt zu gewähren, und wobei das Ableitung-Steuersystem (78) konfiguriert ist, um gleichbleibende Spurverfolgungsfehler zu Null zu treiben und gewünschte Charakteristika der Servosteuerschleife (66), die in Form einer Transferfunktion realisiert sind, zu formen.

6. Das Plattenlaufwerk-Servosystem (11) gemäß Anspruch 1, bei dem die Servosteuerschleife (66) mindestens ein Bandsperrfilter (80) aufweist, das konfiguriert ist, um eine Eingangsenergie in das Servosystem (11), die im wesentlichen Resonanzfrequenzen des Servosystems entspricht, herauszufiltern, wobei das Bandsperrfilter (80) wirksam ist, um einen Phasenanteil bei einem Verstärkungsübergang für das Servosystem (11) zu minimieren.

7. Das Plattenlaufwerk-Servosystem (11) gemäß Anspruch 1, bei dem die Servosteuerschleife (66) eine Anlage (62) aufweist, die den Trägerarm (28) und den Servokopf (38) umfaßt, wobei die Anlage (62) eine derselben zugeordnete Transferfunktion aufweist.

8. Das Plattenlaufwerk-Servosystem (11) gemäß Anspruch 1, bei dem die Servosteuerschleife (66) konfiguriert ist, um eine Transferfunktion zu realisieren, die eine Realisierung einer gewünschten Ausrichtung einer Schnittstelle von Kopf (38) und Spur (40) über die Oberfläche (42) der Platte (14) ermöglicht.

9. Das Plattenlaufwerk-Servosystem (11) gemäß Anspruch 1, bei dem die Variationen der Servoverstärkung 96 mit einer Anpassung mit Hilfe der Methode des kleinsten Quadrats charakterisiert sind, was eine Implementierung der sinusförmigen Verstärkungskorrektur (88) ermöglicht.

10. Ein Verfahren zum Steuern eines Positionierens eines Servokopfes (38), der eine Spur (40) eines magnetischen Mediums auf einer sich drehenden Oberfläche (42) einer Festplatte (14) einer Datenspeichervorrichtung (10) verfolgt, wobei das Verfahren folgende Schritte aufweist:

Bewegen der Festplatte (14) in einer Drehung um einen Träger der Datenspeichervorrichtung (10);

Bereitstellen eines Trägerarms (28), der einen Servokopf (38) und einen servogesteuerten Motor (24) zum Bewegen des Armes (28) und des Servokopfes (38) aufweist, wobei der Servokopf (38) konfiguriert ist, um vorab aufgezeichnete Positionierungsinformationen auf der Spur (40) zu lesen, wobei der Trägerarm (28) relativ zu der Datenspeichervorrichtung (10) an einer von dem Kopf (38) beabstandeten Position verbunden ist, um den Kopf (38) über einer gewünschten Spur (40) in der Oberfläche (42) der Festplatte (14) zu positionieren, und wobei der servogesteuerte Motor (24) aufgebaut und angeordnet ist, um ein Positionieren des Armes (28) und des Kopfes (38) auf die gewünschte Spur (40) auf der Oberfläche (42) der Festplatte (14) zu betätigen;

Bereitstellen einer dem Servokopf (38) und dem servogesteuerten Motor (24) zugeordneten Servosteuerschleife (66), wobei die Servosteuerschleife (66) einen Kompensator (64) aufweist, der konfiguriert ist, um eine sinusförmige Verstärkungskorrektur (88) zu implementieren, um Servoverstärkungsvariationen (96), die sich als eine Funktion relativer Positionsunterschiede zwischen dem Servokopf (38) und der gewünschten Spur (40) ergeben, zu korrigieren;

wobei die Servosteuerschleife (66) konfiguriert ist, um ein Eingangssignal, das relative Positionsunterschiede zwischen dem Servokopf (38) und der gewünschten Spur (40) charakterisiert, zu empfangen und ein Ausgangssignal zu liefern, um den servogesteuerten Motor (24) zu aktivieren, wobei sich die relativen Positionsunterschiede aus nicht-kreisförmigen Störungen der Spur (40) relativ zu dem Servokopf (38) ergeben, während der Servokopf (38) in einer Position benachbart zu der Platte (14) getragen wird, während sich die Platte (14) bezüglich des Kopfes (38) dreht, was entsprechende Variationen bei der Servokopfverstärkung (96) bewirkt;
Erfassen der Position des Kopfes (38) bezüglich einer gewünschten Spur (40); und
Kompensieren der Servoverstärkungsvariationen (96) durch Anwenden eines Sinuswellenkorrekturfaktors (88), um Servoverstärkungsvariationen (96), die sich aus nicht-kreisförmigen Störungen der Spur (40) relativ zu dem Kopf (38) ergeben, im wesentlichen auszugleichen, um ein erneutes Positionieren des Kopfes (38) über der Spur (40) zu ermöglichen.

**Revendications**

1. Système d'asservissement de commande de disque (11) pour commander le positionnement d'une tête (38) pour suivre une piste désirée (40) de données portée par un support magnétique sur une surface tournante (42) d'un disque dur (14) d'un dispositif de stockage de données (10), le système d'asservissement (11) comprenant :

une tête asservie (38) configurée pour lire des informations de positionnement enregistrées à l'avance sur la piste désirée (40) ;
un bras support (28) recevant la tête asservie (38), le bras support (28) pouvant être relié par rapport au dispositif de stockage de données (10) à un emplacement espacé de la tête (38) pour positionner la tête (38) sur la piste désirée (40) sur la surface (42) du disque dur (14) ;
un moteur commandé par asservissement (24) associé au bras support (28) et construit et agencé pour actionner le positionnement du bras (28) et de la tête (38) sur la piste désirée (40) sur la surface (42) du disque dur (14) ; et
une boucle de commande d'asservissement (66) associée à la tête asservie (38) et au moteur commandé par asservissement (24), la boucle de commande d'asservissement (66) comprenant :

un compensateur (64) configuré pour mettre en oeuvre une correction sinusoïdale (88) pour corriger les variations de gain d'asservissement (96) résultantes en fonction des différences de position relatives entre la tête asservie (38) et la piste désirée (40), la boucle de commande d'asservissement (66) étant configurée pour recevoir un signal d'entrée (74) caractérisant la différence de position relative entre la tête asservie (38) et la piste désirée (40) et fournir une sortie (81) pour activer le moteur commandé par asservissement (24) pour déplacer le bras support (28) pour repositionner la tête (38) pour corriger sensiblement la différence de position relative, les différences de position relatives résultant de perturbations acirculaires de la piste (40) par rapport à la tête asservie (38) pendant que la tête asservie (38) est portée dans une position relative fixe adjacente au disque (14) à mesure que le disque (14) tourne par rapport à la tête (38), ce qui produit les variations correspondantes du gain d'asservissement (96) ;

**caractérisé en ce que** ledit compensateur (64) est configuré pour mettre en oeuvre ladite correction sinusoïdale (88) sous la forme d'une correction de gain appliquée pour décaler sensiblement les variations du gain d'asservissement.

2. Système d'asservissement de commande de disque (11) selon la revendication 1, dans lequel la correction de gain d'onde sinusoïdale est appliquée sous la forme d'une meilleure adaptation.

3. Système d'asservissement de commande de disque (11) selon la revendication 1, dans lequel la boucle de commande d'asservissement (66) comprend un réseau de compensation à avance de phase (76) configuré pour communiquer une avance de phase au gain de la tête asservie (38) pour obtenir des caractéristiques de gain souhaitables pour une fréquence de coupure de gain.

4. Système d'asservissement de commande de disque (11) selon la revendication 1, dans lequel la boucle de commande d'asservissement (66) comprend un système de commande proportionnelle plus intégrale (78) dans lequel la sortie comprenant une commande d'activation d'asservissement est proportionnelle à une combinaison linéaire de l'entrée et de l'intégrale dans le temps de l'entrée, le système de commande intégrale (78) ayant une action intégrale pouvant être configurée pour communiquer un point de consigne désiré et le système de commande proportionnelle (78) pouvant être configuré pour communiquer un déphasage désiré.

5. Système d'asservissement de commande de disque (11) selon la revendication 1, dans lequel la boucle de commande d'asservissement (66) comprend un système de commande proportionnelle plus intégrale plus dérivée (78) dans lequel la sortie comprenant une commande d'activation d'asservissement est proportionnelle à une combinaison linéaire de l'entrée, de l'intégrale dans le temps de l'entrée, et de la vitesse de variation dans le temps de l'entrée, le système de commande proportionnelle (78) pouvant être configuré pour communiquer un déphasage désiré, le système de commande intégrale (78) ayant une action intégrale pouvant être configurée pour communiquer un point de consigne désiré, et le système de commande dérivée (78) étant configuré pour amener à zéro les erreurs de poursuite en régime stabilisé et mettre en forme les caractéristiques désirées de la boucle de commande d'asservissement (66) réalisées sous la forme d'une fonction de transfert.

6. Système d'asservissement de commande de disque (11) selon la revendication 1, dans lequel la boucle de commande d'asservissement (66) comprend au moins un filtre réjecteur de bande (80) configuré pour filtrer l'énergie d'entrée vers le système d'asservissement (11) correspondant sensiblement aux fréquences de résonance du système d'asservissement (11), le filtre réjecteur de bande (80) pouvant être actionné pour minimiser la contribution de phase à la coupure de gain pour le système d'asservissement (11).

**7.** Système d'asservissement de commande de disque (11) selon la revendication 1, dans lequel la boucle de commande d'asservissement (66) comprend une installation (62) comportant le bras support (28) et la tête asservie (38), l'installation (62) ayant une fonction de transfert associée à celle-ci.

**8.** Système d'asservissement de commande de disque (11) selon la revendication 1, dans lequel la boucle de commande d'asservissement (66) est configurée pour réaliser une fonction de transfert permettant la réalisation de l'alignement désiré d'interface de tête (38) et piste (40) d'un bout à l'autre de la surface (42) du disque (14).

**9.** Système d'asservissement de commande de disque (11) selon la revendication 1, dans lequel les variations du gain d'asservissement (96) sont **caractérisées par** une adaptation aux moindres carrés, permettant la mise en oeuvre de la correction de gain sinusoïdale (88).

**10.** Procédé pour commander le positionnement d'une tête asservie (38) suivant une piste (40) d'un support magnétique sur une surface tournante (42) d'un disque dur (14) d'un dispositif de stockage de données (10), le procédé comprenant les étapes consistant à :

faire tourner le disque dur (14) autour du support du dispositif de stockage de données (10) ;

fournir un bras support (28) comportant une tête asservie (38) et un moteur commandé par asservissement (24) pour déplacer le bras (28) et la tête asservie (38), la tête asservie (38) étant configurée pour lire des informations de positionnement enregistrées à l'avance sur la piste (40), le bras support (28) étant relié par rapport au dispositif de stockage de données (10) à un emplacement espacé de la tête (38) pour positionner la tête (38) sur une piste désirée (40) sur la surface (42) du disque dur (14), et le moteur commandé par asservissement (24) étant construit et agencé pour actionner le positionnement du bras (28) et de la tête (38) sur la surface (42) du disque dur (14) ;

fournir une boucle de commande d'asservissement (66) associée à la tête asservie (38) et au moteur commandé par asservissement (24), la boucle de commande d'asservissement (66) comprenant un compensateur (64) configuré pour mettre en oeuvre une correction sinusoïdale de gain (88) pour corriger les variations de gain d'asservissement (96) résultantes en fonction des différences de position relatives entre la tête asservie (38) et la piste désirée (40) ;

la boucle de commande d'asservissement (66) étant configurée pour recevoir un signal d'entrée caractérisant les différences de position relative entre la tête asservie (38) et la piste désirée (40) et fournir une sortie pour activer le moteur commandé par asservissement (24), les différences de position relatives résultant de perturbations acirculaires de la piste (40) par rapport à la tête asservie (38) pendant que la tête asservie (38) est portée dans une position adjacente au disque (14) à mesure que le disque (14) tourne par rapport à la tête (38), ce qui produit les variations correspondantes du gain de tête asservie (96) ;

détecter la position de la tête (38) par rapport à une piste désirée (40) ;

compenser les variations du gain d'asservissement (96) en appliquant un facteur de correction d'onde sinusoïdale (88) pour décaler sensiblement les variations du gain d'asservissement (96) résultant des perturbations acirculaires de la piste (40) par rapport à la tête (38) pour faciliter le repositionnement de la tête (38) sur la piste (40).

FIG. II

FIG 2

EP 0 777 215 B1

ε

C(s) 64

LEAD 76

PID 78

79

NOTCHES 80

74

81

Fig 3

ε 74 → LEAD 76 → β → X 97 (α) → PID 78 → 79

δ ← K_MR 95 ← Σ 92 ← 1 94

MR MAG 84 → X 90 ← SIN(.) 88 ← Σ 86 ← CURRENT POS 72

MR PHASE 82 → Σ 86

FIG. 11

MR GAIN VS. TRACK

GAIN (dB)

SERVO TRACK

FIG 5

EP 0 777 215 B1